# EUROPEAN PATENT APPLICATION

(11) **EP 1 369 858 A1**
(43) Date of publication of application: **10.12.2003**
(21) Application number: 02705200.0
(22) Date of filing: 14.03.2002
(51) Int. Cl.: G11B 7/24

(54) **OPTICAL DISK**

(30) Priority: 14.03.2001 JP 2001072882
(71) Applicant: Sony Corporation, Tokyo 141-0001 (JP)
(72) Inventor: YAMASAKI, Takeshi c/o SONY CORPORATION, Shinagawa-ku, Tokyo 141-0001 (JP); YAMAMOTO, Kenji c/o SONY CORPORATION, Shinagawa-ku, Tokyo 141-0001 (JP); KASHIWAGI, Toshiyuki c/o SONY CORPORATION, Shinagawa-ku, Tokyo 141-0001 (JP)
(74) Representative: Müller, Frithjof E., Dipl.-Ing.
(86) International application number: JP0202436
(87) International publication number: WO02075732

(57) **Abstract**

An optical disc comprising a substrate and a recording layer and a light-transmitting layer, laid on a substrate one upon the other in the order mentioned. A light beam is applied to the recording layer through the light-transmitting layer, to record and/or reproduce data on the disc. The light-transmitting layer is composed of at least two material layers laid one on the other and having different refractive indices. The disc is designed to set the spherical aberration caused by an objective lens that focuses the light beam used to record and/or reproduce data, at a value close to a minimum.

## Description

### Technical Field

The present invention relates to an optical disc which has a light-transmitting layer, on which data signals have been recorded through the light-transmitting layer and from which the data signals recorded are reproduced.

### Background Art

Hitherto, optical discs have been used, each comprising a recording layer, a reflecting layer and the like, which are laminated upon another on a substrate. A light beam is applied to the recording layer of an optical disc, thus recording a data signal on the optical disc. Another light beam is applied to the recording layer, thereby reproducing the data signal recorded on the recording layer. It is demanded that the recording density of optical discs be increased so that as much data as possible may be recorded on each optical disc. A variety of techniques has been proposed to meet this demand.

The recording density of optical discs, i.e., an increase in the storage capacity of each optical disc, can be achieved by some methods. One method is to shorten the wavelength of the light beam applied from a light source to record data signals on the optical disc and the wavelength of the light beam applied to reproduce data signals from the optical disc. Another method is to increase the numerical aperture (NA) of the objective lens which focuses a light beam emitted from a light source on the signal-recording layer of the optical disc, thereby to reduce the size of the beam spot formed on the focal plane.

For CDs (Compact Discs, a type of optical discs), for example, a light beam having wavelength of 780 nm is applied to read data signals from the CDs, and an objective lens having numerical aperture (NA) of 0.45 is employed. The storage capacity of each CD is thereby increased to 650 MB. For DVD-ROMs (Digital Versatile Disc Read Only Memories), a light beam having wavelength of 650 nm is applied to record or reproduce data signals from the DVD-ROMs, and an objective lens having numerical aperture (NA) of 0.6 is used. Thus, the storage capacity of each DVD-ROM is increased to 4.7 GB.

The applicant hereof has proposed an optical disc that can record data in a high density when a light beam of a short wavelength is applied to it through an objective lens having a large numerical aperture (NA). This optical disc has a light-transmitting layer, or a thin cover layer. The light beam is first applied to the light-transmitting layer, thereby to record or reproduce data on and from the optical disc. More precisely, a light beam having a wavelength shorter than 450 nm is applied to the disc through an objective lens having a numerical aperture (NA) larger than 0.78. This optical disc can, therefore, store 22 GB of data or a greater amount of data.

When a light beam is applied to any optical disc to record or reproduce data signals on or from the optical disc, it is necessary to minimize the spherical aberration that occurs as the light beam is focused on the optical disc. To this end, the objective lens and the optical disc are designed in terms of their optical properties.

To be more specific, the light-transmitting layer of the optical disc is optimized in refractive index and thickness in accordance with the optical properties of the objective lens that focuses the light beam on the optical disc. This measure reduces, as much as possible, the spherical aberration that takes place when the light beam is applied to the optical disc. In other words, the refractive index and thickness of the light-transmitting layer are set at such values to minimize the spherical aberration caused by the objective lens.

Consider an optical disc that has a recording layer and a light-transmitting layer which covers the recording layer and to which light beams of short wavelength are applied through an objective lens having a large numerical aperture (NA) to record data at a high density and reproduce the data. Since the objective lens has a large numerical aperture (NA), either light beam focused on the recording layer of the optical disc undergoes spherical aberration if the refractive index of the light-transmitting layer differs from the ideal refractive index that the medium should have to minimize the spherical aberration. (The ideal refractive index shall be hereinafter referred to as "design refractive index of the objective lens.")

Hence it is required that the refractive index of the light-transmitting layer be changed to the design refractive index of the objective lens. It is extremely difficult, however, to change the refractive index of the light-transmitting layer, because the refractive index is specific to the material of the light-transmitting layer.

The light-transmitting layer may be made of a single material. In this case, the refractive index of the material determines that of the light-transmitting layer. It is therefore necessary to search for a material whose refractive index is identical to the design refractive index of the objective lens. This is not so practical a method. Should there exist such a material, it could not be selected and used due to its other physical properties such as mechanical strength. If a material selected had other desirable properties, its refractive index would be different from the design refractive index of the objective lens. The spherical aberration may not be minimized only if the thickness of the light-transmitting layer is adjusted.

### Disclosure of the Invention

An object of this invention is to provide an optical disc that has light-transmitting layer whose refractive index can easily be adjusted to the design refractive index of the objective lens, thereby to reduce spherical aberration greatly.

In order to attain the object, an optical disc according to the present invention comprises a substrate and at least a recording layer and a light-transmitting layer, laid on the substrate one on the other, in which a light beam is applied to the recording layer via the light-transmitting layer to record and/or reproduce data. The light-transmitting layer is composed of at least two material layers of different materials, laid one on another and having different refractive indices, and is designed to set spherical aberration caused by an objective lens that focuses the light beam used to record and/or reproduce data, at a value close to a minimum.

In the optical disc of this invention, thus configured, the light-transmitting layer is composed of at least two material layers having different refractive indices. The refractive index of the light-transmitting layer as a whole is determined by the refractive indices of the materials of the material layers. The refractive index of the light-transmitting layer can therefore be made to approach the refractive index that objective lens should have (i.e., the design refractive index of the objective lens), by using desirable materials for the material layers or by adjusting the material layers in thickness. This renders it possible to minimize the spherical aberration.

Hence, the materials of the light-transmitting layer can be selected from more materials than in the case the layer is made of only one layer.

The other objects of this invention and the other advantages achieved by this invention will be more apparent from the following description of the embodiment, in conduction with the accompanying drawings.

### Brief Description of the Drawings

FIG. 1 is a cross-sectional view of an optical disc according to the present invention;
FIG. 2 is a graph representing the relation between the spherical aberration and the refractive index of the light-transmitting layer that has a thickness of 100 µm;
FIG. 3 is a diagram showing the relation that the thickness and refractive index of the light-transmitting layer have when the layer is composed of a singly layer;
FIG. 4 is a graph illustrating the relation between the thickness of a layer made of polycarbonate film and the thickness of a layer made of pressure-sensitive adhesive layer; and
FIG. 5 is a diagram depicting the relation between the thickness of the polycarbonate film and the spherical aberration.

### Best Mode for Carrying out the Invention

An optical disc according to the present invention will be described, with reference to the accompanying drawings.

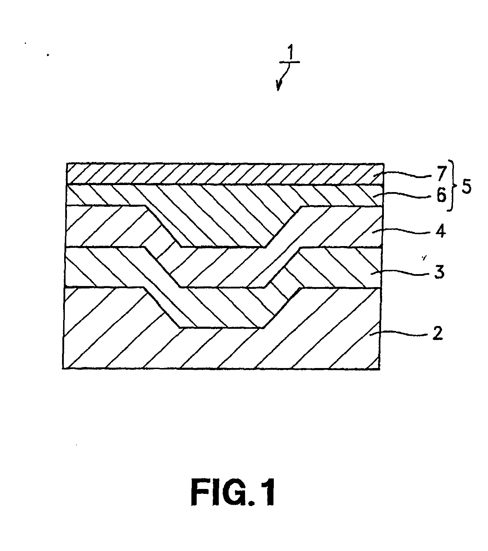

As FIG. 1 shows, the optical disc 1 according to this invention comprises a substrate 2, a reflecting layer 3, a recording layer 4, and a light-transmitting layer 5. The layers 3, 4 and 5 are provided on the substrate 2, laid one upon another, in the order they are mentioned. Light beams are applied to the recording layer 4 through the light-transmitting layer 5, to record and reproduce data signals on and from the recording layer 4.

The substrate 2 is made of a resin such as polycarbonate resin or amorphous polyolefin resin. The substrate 2 is one that is 0.3 mm thick or thicker.

The reflecting layer 3 is provided on the back of the recording layer 4 to reflect light applied to it. The layer 3 is made of, for example, Al or Al alloy.

The recording layer 4 is the layer on which data signals are recorded. In this embodiment, the layer 4 is made of a phase-change material whose reflectance varies and can therefore record data signals. It can be made of any desirable phase-change material. Examples of this material are Ge-Sb-Te, Ag-In-Sb-Te, and the like. The recording layer 4 need not be made of a phase-change material. Rather, it may be made of an organic dye based recording material, a magneto-optical material, or the like.

The light-transmitting layer 5 protects the reflecting layer 3 and the recording layer 4. To the light-transmitting layer 5 there is applied a light beam from a recording/reproducing apparatus to record or reproduce a data signal on and from the recording layer 4. The light beam thus applied passes through the light-transmitting layer 5 and is focused on the recording layer 4. The light-transmitting layer 5 is composed of two material layers 6 and 7. The second material layer 7 is laid on the first material layer 6. The first material layer 6 and the second material layer 7 differ in refractive index. Thus, the refractive indices of the layers 6 and 7, combined together, determines the refractive index of the light-transmitting layer 5. The refractive index of the light-emitting layer 5 is of a value close to the refractive index at which the spherical aberration can be reduced to a minimum.

For example, the light-transmitting layer has a refractive index of an optimal value, or the design refractive index that is based on the design of the objective lens provided the recording/reproducing apparatus and which reduces the spherical aberration to a minimum.

As pointed out earlier, the light-transmitting layer 5 of the optical disc according to this invention is composed of two layers. One of these layers, i.e., the first material layer 6 or the second material layer 7, is made of a material (high refractive-index material) that has a higher refractive index than the material (low refractive index material) of the other material layer. Hence, the light-transmitting layer 5 as a whole exhibits a refractive index that is halfway between the refractive indices of the first and second material layers 6 and 7. This makes it possible to set the refractive index of the layer 5 at a value close to the design refractive index, only if the material layers 6 and 7 are adjusted in terms of refractive index and thickness.

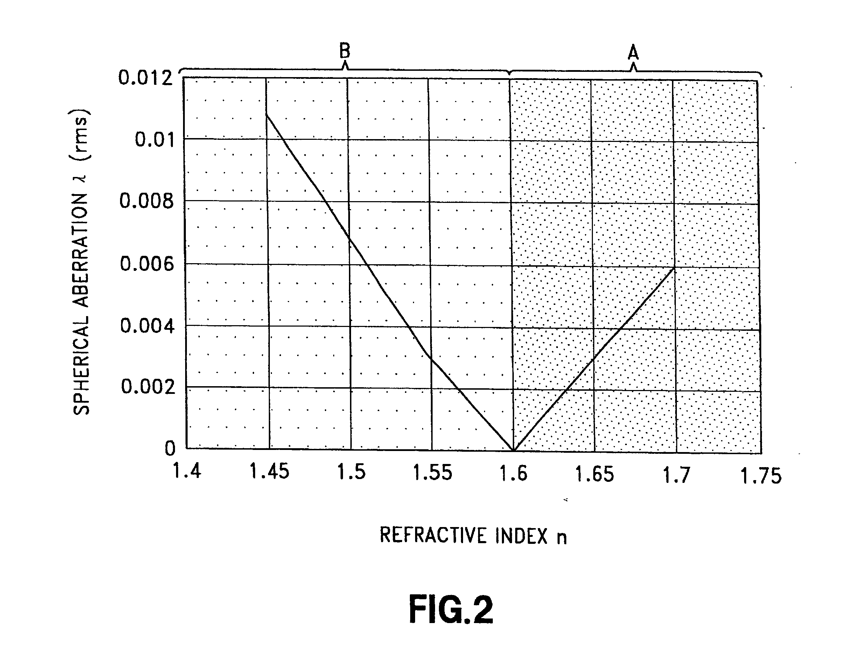

The design refractive index, the high refractive-index material, and the low refractive-index material will be explained. As FIG. 2 shows, the spherical aberration varies as the refractive index of the light-transmitting layer 5 is varied. The spherical aberration is minimal at a specific refractive index (1.6 in this case). This refractive index shall be called "design refractive index."

Any material falling in region A of FIG. 2, which has a refractive index higher than the design refractive index, shall be referred to as "high refractive-index material." Any material falling in region B of FIG. 2, which has a refractive index lower than the design refractive index, shall be referred to as "low refractive-index material."

As indicated above, the light-transmitting layer 5 is a two-layer component and composed of the first material layer 6 and the second material layer 7. The two material layers having different refractive indices are combined, providing one layer that exhibits a particular refractive index. The refractive index of the light-transmitting layer 5, so defined, is close to the value that serves to minimize the spherical aberration. Thus, the light-transmitting layer 5 of the optical disc 1 can possess a refractive index that can decrease the spherical aberration to a minimum. Since the refractive index of the light-transmitting layer 5 can accord well with the design of the lens incorporated in the recording/reproducing apparatus, the light beam applied through the light-transmitting layer 5 undergoes but a small spherical aberration.

In the optical disc 1 of this invention, the first material layer 6 is made of low refractive-index material, while the second material layer 7 is made of high refractive index material. UV resin, pressure-sensitive adhesive, and the like can be exemplified as the low refractive-index material. Polycarbonate film and the like can be exemplified as the high refractive-index material.

In the optical disc 1 of the invention, the first and second material layers 6 and 7 are adjusted in thickness to have an optimal thickness ratio that further decrease the spherical aberration. Alternatively stated, it is desired that the first and second material layers 6 and 7 have an optimal thickness each in order to minimize the spherical aberration caused by the light-transmitting layer 5.

The optimal thickness for the first material layer 6 and the optimal thickness for the second material layer 7 will be explained, with reference to some examples.

The first example is an optical disc 1 comprising a light-transmitting layer 5 that is 100 µm thick and has a refractive index of 1.60. The first material layer 6 is made of pressure-sensitive adhesive (trade name: DVD-8310, manufactured by Nitto Denko Co., Ltd.; refractive index: 1.482). The second material layer 7 is made of polycarbonate film (trade name: C-1400, manufactured by Teijin Co., Ltd.; refractive index: 1.615). The inventors hereof studied to find optimal thickness for each of the first and second material layers 6 and 7. Note that the lens provided in the recording/reproducing apparatus has an NA of 0.85.

First, the inventors made calculations, using the optical design evaluation program (CODE V; U.S. Optical Research Associate), to determine the relation between the refractive index and thickness of the light-transmitting layer of an optical disc. It should be noted that the light-transmitting layer of this disc is composed of a single layer.

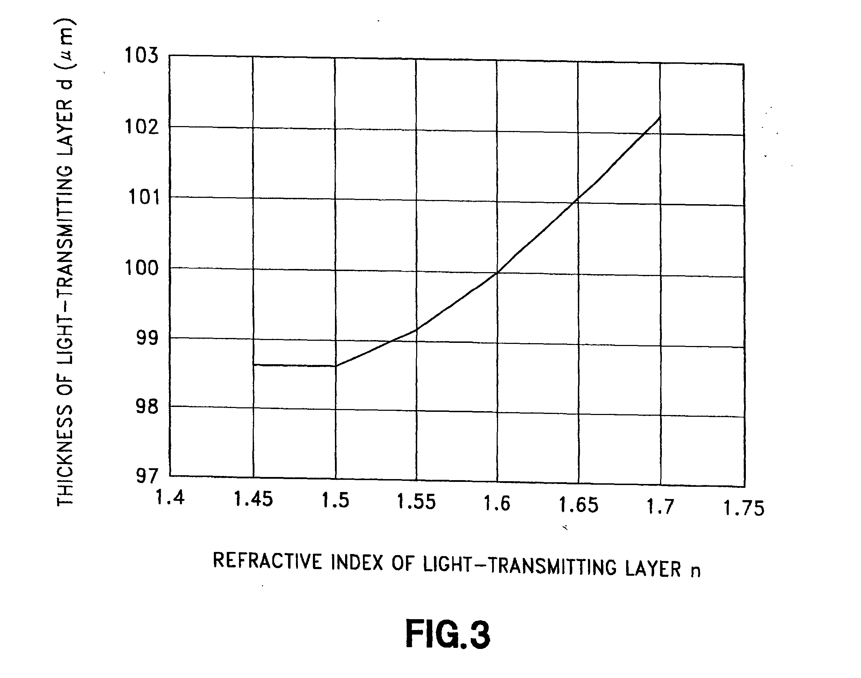

Assume that the spherical aberration is eliminated (or reduced to zero) if the refractive index, i.e., reference refractive index, is 1.6 and the light-transmitting layer 5 is 100 µm thick. Then, the thickness that the light-transmitting layer 5 must have to minimize the spherical aberration deviates from 100 µm if the refractive index of the light-transmitting layer 5 changes, as can be seen from FIG. 3. As FIG. 2 depicts, the spherical aberration is not zero at minimum. The greater the difference between the refractive index and the design refractive index, the more prominent the spherical aberration. In FIG. 3, the abscissa indicates the refractive index, whereas the ordinate shows the thickness the light-transmitting layer must have to minimize the spherical aberration. In FIG. 2, the abscissa shows the refractive index, and the ordinate shows the minimal spherical aberration.

Next, the inventors performed calculations, using the optical design evaluation program, with regard to a light-transmitting layer 5 composed of the first and second material layers 6 and 7. The objective of the calculations was to determine how the first material layer 6 should be thin or thick to minimize the spherical aberration when the second material layer 7 is changed in thickness. Note that the reference refractive index (design refractive index) was set at 1.6, and the light-transmitting layer 5 at 100 µm thick.

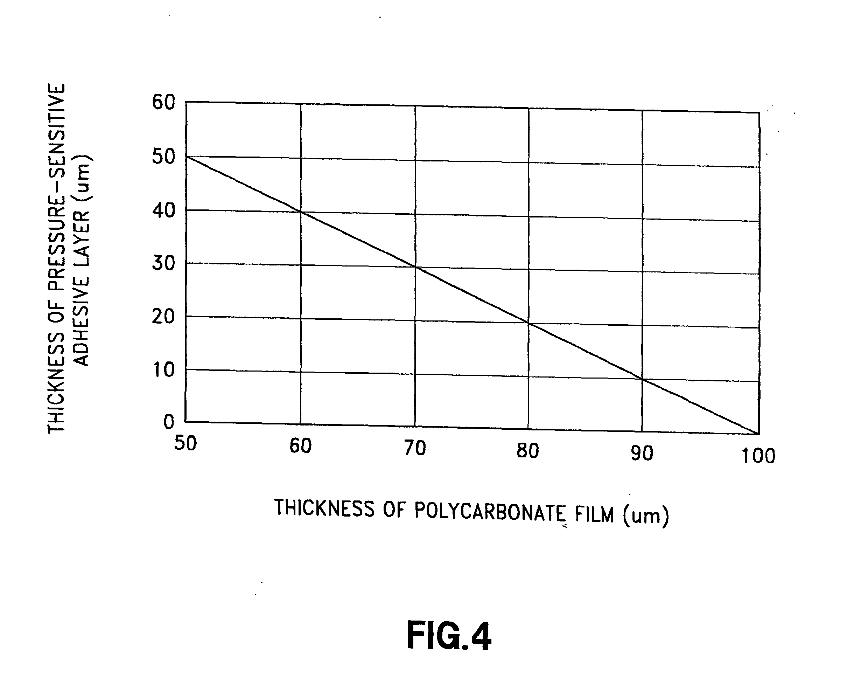

The second material layer 7 made of ploycarbonate film whose refractive index is 1.615 may have a thickness ranging from 50 µm to 100 µm. Then, it only needs to change the thickness of the first material layer 6, which is made of pressure-sensitive adhesive having a refractive index of 1.482, as is illustrated in FIG. 4, in order to make the light-transmitting layer 5 100 µm thick as a whole. In FIG. 4, the abscissa indicates the thickness of the polycarbonate film (i.e., second material layer 7), and the ordinate indicates the thickness of the pressure-sensitive adhesive layer (i.e., first material layer 6).

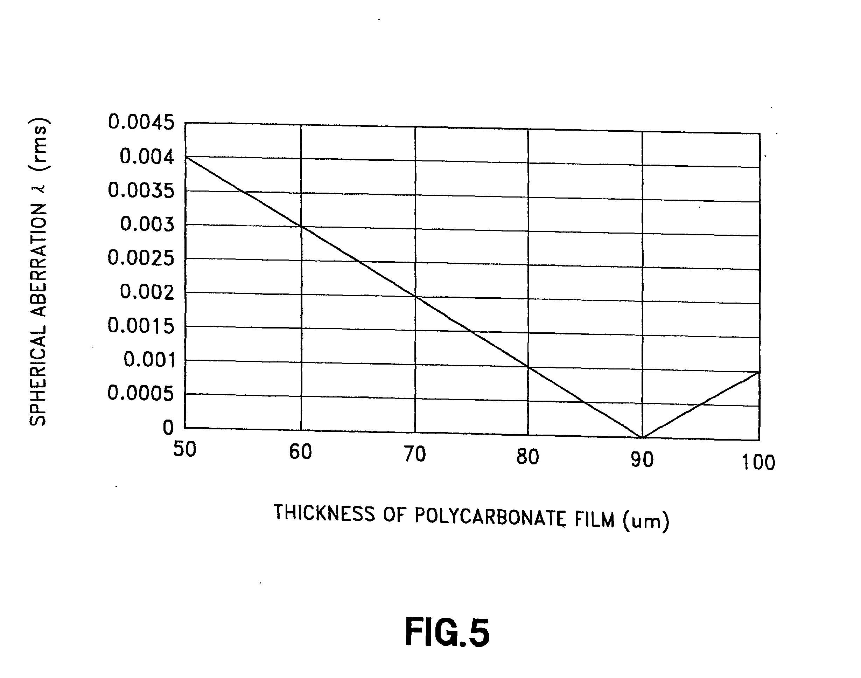

FIG. 5 shows the relation between the thickness of the polycarbonate film and the spherical aberration.

The inventors found that the spherical aberration at the light-transmitting layer 5 decreased to zero when the second material layer 7 made of polycarbonate film and the first material layer 6 made of pressure-sensitive adhesive were 90 µm thick and 10 µm thick, respectively. In FIG. 5, the abscissa depicts the thickness of the polycarbonate film (i.e., second material layer 7) and the ordinate depicts the spherical aberration.

That is, the spherical aberration can be much reduced by changing the thickness of the second material layer 7 made of high refractive-index material that has a refractive index exceeding 1.6 and by combining the second material layer 7 with the first material layer 6 made of low refractive-index material that has a refractive index of less than 1.6. The spherical aberration can be eliminated (or decreased to zero) by adjusting the thickness of the first material layer 6 and that of the second material layer 7.

As explained above, the optical disc 1 of this invention has a light-transmitting layer 5 that is composed of two layers, i.e., the first and second material layers 6 and 7 having different refractive indices. The refractive indices of these material layers 6 and 7 determine the refractive index of the light-transmitting layer 5. The light-transmitting layer 5 of the optical disc 1 can, therefore, have a refractive index close to the value that minimizes the spherical aberration. This means that the light-transmitting layer 5 has a refractive index identical to the design value of the lens that is incorporated in the recording/reproducing apparatus. This reduces the spherical aberration of the light applied to the recording layer 4 through the light-transmitting layer 5.

In the optical disc 1 according to the present invention, the light-transmitting layer 5 has its refractive index defined by those of two materials which have different refractive indices and which constitute the layer 5. In other words, the refractive index of the light-transmitting layer 5 is determined by the refractive indices of the two materials. Hence, the materials of the light-transmitting layer 5 can be selected from more materials than in the case the layer 5 is made of only one layer.

Further, in the optical disc 1 of this invention, the first and second material layers 6 and 7 are adjusted in terms of thickness, to achieve the best possible ratio of thickness. This helps to reduce the spherical aberration of the light applied to the recording layer 4 via the light-transmitting layer 5. Thus, the optical disc 1 according to the invention can achieve a sufficient reduction of spherical aberration even if the light-transmitting layer 5 has a thickness that deviates from the design value.

In the embodiment described above, the light-transmitting layer is composed of two layers of different materials having different refractive indices. Nonetheless, the light-transmitting layer may be composed of three or more layers laid one on anther. In this case, too, the layers are made of low refractive-index materials and high refractive-index materials, whereby the spherical aberration at the light-transmitting layer can be decreased. In the case where three or more layers constitute the light-transmitting layer, too, the layers may be adjusted, one against another, in terms of thickness, in order to minimize the spherical aberration at the entire light-transmitting layer.

The embodiment set forth above is an optical disc 1 having a recording layer 4 that is made of a phase-change material. However, the present invention can be applied to optical discs whose recording layer is made of no phase-change material, that is, to optical discs each having a reflecting layer provided directly upon the substrate.

### Industrial Applicability

An optical disc according to the present invention has a light-transmitting layer that is composed of two or more layers laid on one another and made of materials having different refractive indices. The refractive indices of the layers define the refractive index of the entire light-transmitting layer. The refractive index of the light-transmitting layer is set at such a value as would minimize spherical aberration. That is, the light-transmitting layer has a refractive index close to the value that reduces the spherical aberration to a minimum. Thus, the light-transmitting layer can have a refractive index identical to the design value of the lens provided in the recording/reproducing apparatus. This minimizes the spherical aberration of the light applied to the recording layer through the light-transmitting layer.

In the optical disc according to the present invention, the light-transmitting layer has its refractive index determined by those of its constituent layers that are made of low refractive-index materials and high refractive-index materials. Namely, two materials of different refractive indices are combined to define the refractive index of the entire light-transmitting layer. Therefore, the light-transmitting layer of the optical disc according to the invention can be made of materials selected from more materials than in the case the layer is made of only one layer.

## Claims

1. An optical disc comprising a substrate and at least a recording layer and a light-transmitting layer, laid on the substrate one on the other, in which a light beam is applied to the recording layer through the light-transmitting layer to record and/or reproduce data,
wherein the light-transmitting layer is composed of at least two material layers of different materials, laid one on another and having different refractive indices, and is designed to set spherical aberration caused by an objective lens that focuses the light beam used to record and/or reproduce data, at a value close to a minimum.

2. The optical disc according to claim 1, wherein at least one of the material layers has a refractive index higher than the design refractive index of the objective lens, at least another of the material layers has a refractive index lower than the refractive index of said at least one of the material layers, said at least one of the material layers and said another of the material layers are combined to minimize the spherical aberration caused by the objective lens.

3. The optical disc according to claim 2, wherein the material layers composing the light-transmitting layer, the layer having a refractive index higher than the design refractive index of the objective lens lies on a side at which the light beam is applied.

4. The optical disc according to claim 2, wherein the material layers are adjusted in thickness to reduce spherical aberration caused by the light-transmitting layer to a value close to a minimum.
